# EUROPEAN PATENT SPECIFICATION

(11) **EP 1 627 932 B1**
(45) Date of publication and mention of the grant of the patent: **14.03.2007**
(21) Application number: 04425622.0
(22) Date of filing: 09.08.2004
(51) Int. Cl.: C22F 1/00, F03G 7/06

(54) **Method and device for adsorbing and/or desorbing hydrogen in shape memory alloys**
Methode und Vorrichtung für die Adsorption und/oder Desorption von Wasserstoff in Formgedächnis-Legierungen
Méthode et dispositif pour l'adsorption et/ou desorption d'hydrogene en alliages à mémoire de forme

(43) Date of publication of application: 22.02.2006
(73) Proprietor: C.R.F. SOCIETA' CONSORTILE PER AZIONI, 10043 Orbassano (Torino) (IT)
(72) Inventor: Perlo, Piero, 12048 Sommariva Bosco (CN) (IT); Veca, Antonino, 10020 Casalborgone (TO) (IT); Butera, Francesco, 10100 Torino (IT); Alacqua, Stefano, 10090 Rivoli Cascine Vica (TO) (IT); Capretti, Gianluca, 10043 Orbassano (TO) (IT); Sgroi, Mauro, 10060 San Secondo di Pinerolo (TO) (IT); Innocenti, Gianfranco, 10040 Rivalta (TO) (IT)
(74) Representative: Notaro, Giancarlo

(56) References cited:
- STUHR ET AL: "Localized modes of hydrogen and deuterium in NiTiHx and NiTiDx" JOURNAL OF THE LESS COMMON METALS, vol. 172-174, 1991, pages 319-325, XP002304373
- DAMIANI, C. ET AL: "Hydrogen in Ti-Ni-Cu and Cu-Zn-Al shape memory alloys" JOURNAL OF ALLOYS AND COMPOUNDS , 284(1-2), 243-250 CODEN: JALCEU; ISSN: 0925-8388, 1999, XP004182675
- FRUCHART ET AL: "Structural Transformation in TiNi, a Potential Material for Hydrogen Storage" ZEITSCHRIFT FÜR PHYSIKALISCHE CHEMIE, vol. 179, 1993, pages 225-236, XP009039424
- PATENT ABSTRACTS OF JAPAN vol. 0093, no. 01 (C-316), 28 November 1985 (1985-11-28) & JP 60 138036 A (MATSUSHITA DENKI SANGYO KK), 22 July 1985 (1985-07-22)

## Description

The present invention relates to methods and devices for hydrogen storage and in particular for hydrogen adsorption in a storage structure and/or hydrogen desorption from said structure.

The aim of the present invention is to propose a device and a method for hydrogen storage with advantages in terms of simplicity, low costs and operating efficiency.

In view of achieving said aim, the object of the invention is a device according to claim 1 and a method according to claim 5, as well as the use of a structure comprising a shape-memory alloy for hydrogen adsorption and/or desorption according to claim 9.

The invention will now be described with reference to the accompanying drawings, in which:
- Figure 1 is a schematic view of a crystal lattice of a shape-memory alloy, which shows the storage of hydrogen atoms in the interstitial sites of the lattice;
- Figures 2, 3 show the crystal lattice of a shape-memory alloy in its martensitic phase and in its austenitic phase, respectively, according to an embodiment of the invention in which adsorption and/or desorption processes and their kinetics are modulated through a temperature variation causing the passage from one phase to another;
- Figure 4 shows a martensitic multivariant structure of a shape-memory alloy, used in a further embodiment of the invention;
- Figure 5 is a magnified view of a detail of Figure 4, and
- Figures 6, 7 show a detail of Figure 5 in a first condition (martensitic multivariant structure) and in a second condition (austenitic reticular structure or martensitic monovariant structure), respectively, which can be turned into by heating or by applying a magnetic field.

The basic idea underlying the present invention consists in the use of shape-memory alloys as material for reversible hydrogen adsorption and/or desorption.

In the present description and in the following claims, the term "shape-memory alloy" refers to any intermetallic compound characterized by a reversible thermoplastic martensitic transformation, i.e. which can deform microscopically if subjected to an electric, thermal or magnetic stimulus. All shape-memory alloys are characterized by two distinct crystalline phases. The presence of either phase depends on temperature and/on the stress undergone by the material: the low temperature stable phase is referred to as "martensitic phase", whereas the high temperature stable phase is referred to as "austenitic phase".

Shape-memory alloys to be used in the present invention are for instance:
- Ni-based alloys, e.g.: Ni-Ti, Ni-Ti-Cu, Ni-Ti-Fe, Ni-Ti-Cr, Ni-Al;
- Cu-based alloys, e.g.: CU-Al-Ni, Cu-Zn-X (X= Si, Sn, Al), Cu-Zn, Cu-Sn;
- magnetic alloys, e.g.: Ni-Mn-Ga;
- high temperature alloys, e.g.: Ni-Ti-Hf;
- other alloys, e.g.: Fe-Pt, Fe-Mn-Si, Mn-Cu, In-Ti, Ag-Cd, Au-Cd,
or any other alloy having a different elementary composition and with a reversible thermoplastic martensitic transformation.

The invention basically includes two different embodiments exploiting two different storing mechanisms.

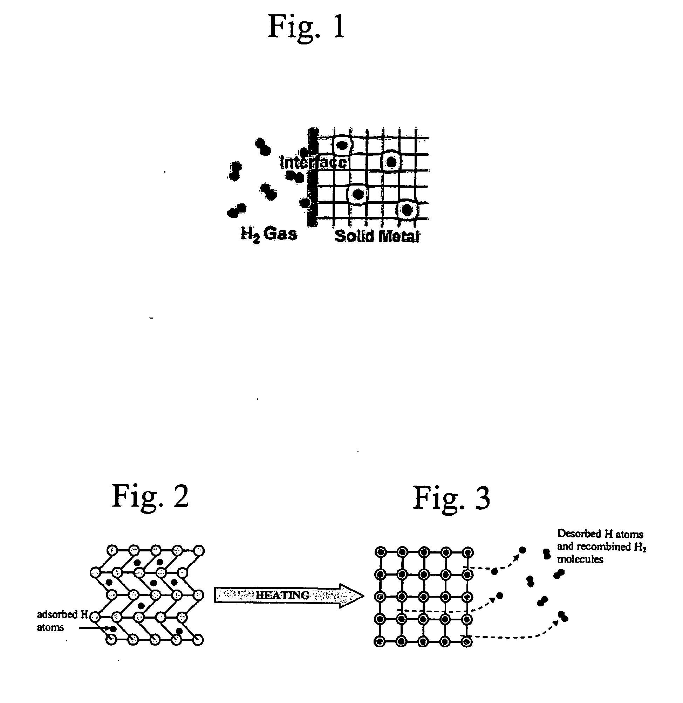

In a first embodiment, hydrogen is stored in the interstitial sites of the crystal lattice of the shape-memory alloy. This phenomenon occurs (see Figure 1) when molecular hydrogen gets in contact with the surface of the shape-memory material, thus forming a hydride, according to the following adsorption/desorption cycle:
1. hydrogen molecules dissociate catalytically due to the contact with the surface of the alloy;
2. atomic hydrogen migrates into the alloy and fills the interstitial sites;
3. the crystal lattice supplies the energy required for molecular dissociation; hydrogen absorption in the interatomic space (hydrogenation) is a exothermic process that requires cooling, whereas hydrogen subtraction (dehydrogenation) is a endothermic process that requires heat;
4. adsorption and/or desorption processes and their kinetics can be modulated by temperature variation, which results in the transformation from martensitic phase (Figure 2) to austenitic phase (Figure 3). The transformation martensite/austenite causes a change in reticular parameters (for instance from tetragonal to cubic in the case of NiTi alloys) resulting in a reduction of interstitial spaces. The reduction of interstitial spaces together with a temperature increase used to cause the passage from martensitic to austenitic phase, cause the release of adsorbed hydrogen in the low temperature martensitic phase. Figure 2 shows hydrogen atoms adsorbed in the interstitial sites of the lattice, whereas in Figure 3 atoms can be seen outside the structure, where they recombine forming H₂ molecules.

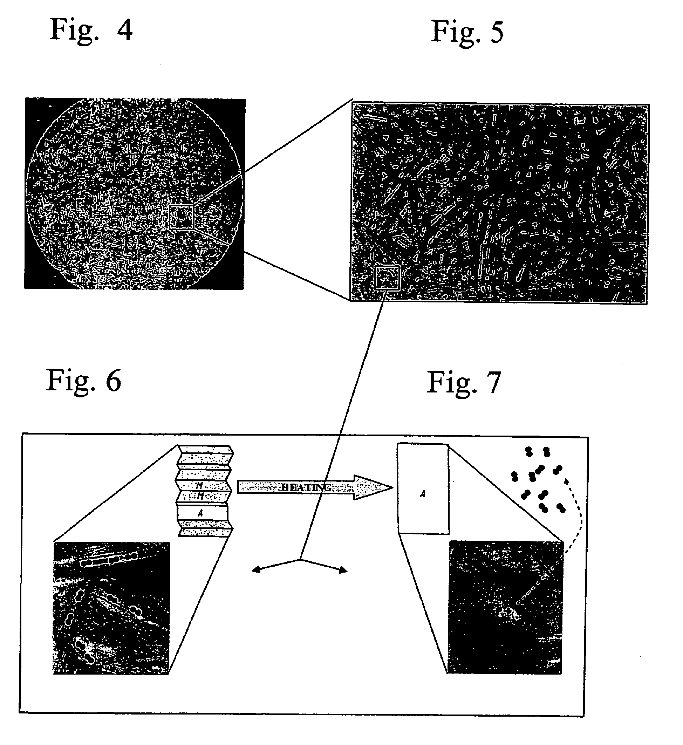

In a second embodiment, hydrogen is stored in the spaces between martensitic multivariant structures. In this case hydrogen molecules are adsorbed inside the material (see Figures 4, 5, 6) and are trapped in the boundary areas between martensitic variants (martensitic structures with different orientation). As a consequence of the heating of the material, or of the application of a magnetic field in the case of magnetic shape-memory materials, hydrogen molecules leave the interstices (Figure 7) due to the martensitic multivariant structure turning into an austenitic reticular structure, in the first case, or into a martensitic monovariant structure, in the second case.

Obviously, though the basic idea of the invention remains the same, embodiments and construction details can widely vary with respect to what has been described by mere way of example, however without leaving the framework of the present invention.

## Claims

1. A device for reversible hydrogen adsorption and/or desorption, comprising a structure including a shape-memory alloy, **characterized in that** it is associated with means for increasing the temperature of the shape-memory alloy, or for applying a magnetic field, in the case of magnetic shape-memory materials, so as to turn said alloy from martensitic to austenitic phase when hydrogen atoms have to be desorbed from said structure.

2. The device according to claim 1, **characterized in that** said shape-memory alloy is chosen among:
- Ni-based alloys, e.g.: Ni-Ti, Ni-Ti-Cu, Ni-Ti-Fe, Ni-Ti-Cr, Ni-Al;
- Cu-based alloys, e.g.: CU-Al-Ni, Cu-Zn-X (X= Si, Sn, Al), Cu-Zn, Cu-Sn;
- magnetic alloys, e.g.: Ni-Mn-Ga;
- high temperature alloys, e.g.: Ni-Ti-Hf;
- other alloys, e.g.: Fe-Pt, Fe-Mn-Si, Mn-Cu, In-Ti, Ag-Cd, Au-Cd.

3. The device according to claim 1 or 2, **characterized in that** the shape-memory alloy has a crystal lattice suitable for storing hydrogen atoms in its interstitial sites.

4. The device according to claim 1, **characterized in that** the shape-memory alloy stores hydrogen atoms in the boundary areas between martensitic structures having different orientation.

5. A method for reversible hydrogen adsorption and/or desorption, wherein a structure comprising a shape-memory alloy is used as material for hydrogen storage, **characterized in that** the shape-memory alloy is subjected to a temperature increase or to a magnetic field (in the case of a magnetic shape-memory material), so as to turn said alloy from martensitic to austenitic phase when hydrogen atoms have to be desorbed from said structure.

6. The method according to claim 5, **characterized in that** said shape-memory alloy is chosen among:
- Ni-based alloys, e.g.: Ni-Ti, Ni-Ti-Cu, Ni-Ti-Fe, Ni-Ti-Cr, Ni-Al;
- Cu-based alloys, e.g.: CU-Al-Ni, Cu-Zn-X (X= Si, Sn, Al), Cu-Zn, Cu-Sn;
- magnetic alloys, e.g.: Ni-Mn-Ga;
- high temperature alloys, e.g.: Ni-Ti-Hf;
- other alloys, e.g.: Fe-Pt, Fe-Mn-Si, Mn-Cu, In-Ti, Ag-Cd, Au-Cd.

7. The method according to claim 5 or 6, **characterized in that** the shape-memory alloy has a crystal lattice suitable for storing hydrogen atoms in its interstitial sites.

8. The method according to claim 5 or 6, **characterized in that** the shape-memory alloy stores hydrogen atoms in the boundary areas between martensitic structures having different orientation.

9. Use of a shape-memory alloy as structure for reversible hydrogen adsorption and/or desorption, **characterized in that** the shape-memory alloy is subjected to a temperature increase or to a magnetic field (in the case of a magnetic shape-memory material), so as to turn said alloy from martensitic to austenitic phase when hydrogen atoms have to be desorbed from said structure.

10. The use according to the preceding claim, **characterized in that** the shape-memory alloy is chosen among:
- Ni-based alloys, e.g.: Ni-Ti, Ni-Ti-Cu, Ni-Ti-Fe, Ni-Ti-Cr, Ni-A1;
- Cu-based alloys, e.g.: CU-A1-Ni, Cu-Zn-X (X= Si, Sn, A1), Cu-Zn, Cu-Sn;
- magnetic alloys, e.g.: Ni-Mn-Ga;
- high temperature alloys, e.g.: Ni-Ti-Hf;
- other alloys, e.g.: Fe-Pt, Fe-Mn-Si, Mn-Cu, In-Ti, Ag-Cd, Au-Cd.

## Patentansprüche

1. Vorrichtung zur reversiblen Adsorption und/oder Desorption von Wasserstoff, umfassend eine Struktur einschließlich einer Formgedächtnis-Legierung, **dadurch gekennzeichnet, dass** sie mit Mitteln im Zusammenhang steht bzw. aufweist, um die Temperatur der Formgedächtnis-Legierung zu erhöhen, oder um in dem Fall von magnetischen Formgedächtnis-Materialien ein Magnetfeld anzulegen, um so die Legierung von der martensitischen Phase in die austenitische Phase umzuwandeln, wenn Wasserstoffatome aus der Struktur desorbiert werden sollen.

2. Vorrichtung nach Anspruch 1, **dadurch gekennzeichnet, dass** die Formgedächtnislegierung gewählt wird aus:
- auf Ni-basierenden Legierungen, z.B.: Ni-Ti, Ni-Ti-Cu, Ni-Ti-Fe, Ni-Ti-Cr, Ni-Al;
- auf Cu-basierende Legierungen, z.B.: Cu-Al-Ni, Cu-Zn-X (X = Si, Sn, Al), Cu-Zn, Cu-Sn;
- magnetischen Legierungen, z.B.: Ni-Mn-Ga;
- Hochtemperaturlegierungen, z.B.: Ni-Ti-Hf;
- anderen Legierungen, z.B.: Fe-Pt, Fe-Mn-Si, Mn-Cu, In-Ti, Ag-Cd, Au-Cd.

3. Vorrichtung nach Anspruch 1 oder 2, **dadurch gekennzeichnet, dass** die Formgedächtnis-Legierung ein Kristallgitter aufweist, welches zur Speicherung der Wasserstoffatome in den Zwischengitterplätzen geeignet ist.

4. Vorrichtung nach Anspruch 1, **dadurch gekennzeichnet, dass** die Formgedächtnis-Legierung Wasserstoffatome in den Korngrenzenbereichen zwischen den martensitischen Strukturen, welche unterschiedliche Orientierung aufweisen, speichert.

5. Verfahren zur reversiblen Adsorption und/oder Desorption von Wasserstoff, wobei eine Struktur umfassend eine Formgedächtnis-Legierung als ein Material zur Wasserstoffspeicherung verwendet wird, **dadurch gekennzeichnet, dass** die Formgedächtnis-Legierung einer Temperaturerhöhung oder einem magnetischen Feld (in dem Fall eines magnetischen Formgedächtnis-Materials) unterworfen wird, um so die Legierung von der martensitischen in die austenitische Phase umzuwandeln, wenn Wasserstoffatome aus der Struktur desorbiert werden sollen.

6. Verfahren nach Anspruch 5, **dadurch gekennzeichnet, dass** die Formgedächtnislegierung gewählt wird aus:
- auf Ni-basierenden Legierungen, z.B.: Ni-Ti, Ni-Ti-Cu, Ni-Ti-Fe, Ni-Ti-Cr, Ni-Al;
- auf Cu-basierende Legierungen, z.B.: Cu-AI-Ni, Cu-Zn-X (X = Si, Sn, Al), Cu-Zn, Cu-Sn;
- magnetischen Legierungen, z.B.: Ni-Mn-Ga;
- Hochtemperaturlegierungen, z.B.: Ni-Ti-Hf;
- anderen Legierungen, z.B.: Fe-Pt, Fe-Mn-Si, Mn-Cu, In-Ti, Ag-Cd, Au-Cd.

7. Verfahren nach Anspruch 5 oder 6, **dadurch gekennzeichnet, dass** die Formgedächtnis-Legierung ein Kristallgitter aufweist, welches zur Speicherung von Wasserstoffatomen in den Zwischengitterplätzen geeignet ist.

8. Verfahren nach Anspruch 5 oder 6, **dadurch gekennzeichnet, dass** die Formgedächtnis-Legierung Wasserstoffatome in den Korngrenzenbereichen zwischen den martensitischen Strukturen, welche unterschiedliche Orientierung aufweisen, speichern.

9. Verwendung einer Formgedächtnis-Legierung als Struktur zur reversiblen Adsorption und/oder Desorption von Wasserstoff, **dadurch gekennzeichnet, dass** die Formgedächtnis-Legierung einer Temperaturerhöhung oder einem magnetischen Feld (in dem Fall eines magnetischen Formgedächtnis-Materials) unterworfen wird, um so die Legierung von der martensitischen Phase in die austenitische Phase umzuwandeln, wenn Wasserstoffatome aus der Struktur desorbiert werden sollen.

10. Verwendung nach dem vorangehenden Anspruch, **dadurch gekennzeichnet, dass** die Formgedächtnis-Legierung gewählt wird aus:
- auf Ni-basierenden Legierungen, z.B.: Ni-Ti, Ni-Ti-Cu, Ni-Ti-Fe, Ni-Ti-Cr, Ni-Al;
- auf Cu-basierende Legierungen, z.B.: Cu-Al-Ni, Cu-Zn-X (X = Si, Sn, Al), Cu-Zn, Cu-Sn;
- magnetischen Legierungen, z.B.: Ni-Mn-Ga;
- Hochtemperaturlegierungen, z.B.: Ni-Ti-Hf;
- anderen Legierungen, z.B.: Fe-Pt, Fe-Mn-Si, Mn-Cu, In-Ti, Ag-Cd, Au-Cd.

## Revendications

1. Dispositif pour l'adsorption et/ou la désorption réversible(s) d'hydrogène, comportant une structure comprenant un alliage à mémoire de forme, **caractérisé en ce qu'**il est associé avec des moyens destinés à augmenter la température de l'alliage à mémoire de forme, ou à appliquer un champ magnétique, dans le cas des matériaux à mémoire de forme magnétiques, afin de transformer ledit alliage de la phase martensitique à la phase austénitique quand des atomes d'hydrogène doivent être désorbés de ladite structure.

2. Dispositif selon la revendication 1, **caractérisé en ce que** ledit alliage à mémoire de forme est choisi parmi :
- les alliages à base de Ni, par exemple : le Ni-Ti, le Ni-Ti-Cu, le Ni-Ti-Fe, le Ni-Ti-Cr, le Ni-Al ;
- les alliages à base de Cu, par exemple : le Cu-Al-Ni, le Cu-Zn-X (X = Si, Sn, Al), le Cu-Zn, le Cu-Sn ;
- les alliages magnétiques, par exemple : le Ni-Mn-Ga ;
- les alliages à température élevée, par exemple : le Ni-Ti-Hf ;
- d'autres alliages, par exemple : le Fe-Pt, le Fe-Mn-Si, le Mn-Cu, l'In-Ti, l'Ag-Cd, l'Au-Cd.

3. Dispositif selon la revendication 1 ou 2, **caractérisé en ce que** l'alliage à mémoire de forme possède un réseau cristallin adéquat pour le stockage d'atomes d'hydrogène dans ses sites interstitiels.

4. Dispositif selon la revendication 1, **caractérisé en ce que** l'alliage à mémoire de forme stocke des atomes d'hydrogène dans les zones limites entre les structures martensitiques ayant une orientation différente

5. Procédé pour l'adsorption et/ou la désorption réversible(s) d'hydrogène, dans lequel une structure comportant un alliage à mémoire de forme est employé en tant que matériau pour le stockage de l'hydrogène, **caractérisé en ce que** l'alliage à mémoire de forme est soumis à une augmentation de température ou à un champ magnétique (dans le cas d'un matériau à mémoire de forme magnétique), afin de transformer ledit alliage de la phase martensitique à la phase austénitique quand les atomes d'hydrogène doivent être désorbés de ladite structure.

6. Procédé selon la revendication 5, **caractérisé en ce que** ledit alliage à mémoire de forme est choisi parmi :
- les alliages à base de Ni, par exemple : le Ni-Ti, le Ni-Ti-Cu, le Ni-Ti-Fe, le Ni-Ti-Cr, le Ni-Al ;
- les alliages à base de Cu, par exemple : le Cu-Al-Ni, le Cu-Zn-X (X = Si, Sn, Al), le Cu-Zn, le Cu-Sn ;
- les alliages magnétiques, par exemple : le Ni-Mn-Ga ;
- les alliages à température élevée, par exemple : le Ni-Ti-Hf ;
- d'autres alliages, par exemple : le Fe-Pt, le Fe-Mn-Si, le Mn-Cu, l'In-Ti, l'Ag-Cd, l'Au-Cd.

7. Procédé selon la revendication 5 ou 6, **caractérisé en ce que** l'alliage à mémoire de forme possède un réseau cristallin adéquat pour stocker des atomes d'hydrogène dans ses sites interstitiels.

8. Procédé selon la revendication 5 ou 6, **caractérisé en ce que** l'alliage à mémoire de forme stocke des atomes d'hydrogène dans les zones limites entre les structures martensitiques ayant une orientation différente.

9. Utilisation d'un alliage à mémoire de forme en tant que structure pour l'adsorption et/ou la désorption réversible(s) d'hydrogène, **caractérisé en ce que** l'alliage à mémoire de forme est soumis à une augmentation de température ou à un champ magnétique (dans le cas d'un matériau à mémoire de forme magnétique), afin de transformer ledit alliage de la phase martensitique à la phase austénitique quand les atomes d'hydrogène doivent être désorbés de ladite structure.

10. Utilisation selon la revendication précédente, **caractérisé en ce que** l'alliage à mémoire de forme est choisi parmi :
- les alliages à base de Ni, par exemple : le Ni-Ti, le Ni-Ti-Cu, le Ni-Ti-Fe, le Ni-Ti-Cr, le Ni-Al ;
- les alliages à base de Cu, par exemple : le Cu-Al-Ni, le Cu-Zn-X (X = Si, Sn, Al), le Cu-Zn, le Cu-Sn ;
- les alliages magnétiques, par exemple : le Ni-Mn-Ga ;
- les alliages à température élevée, par exemple : le Ni-Ti-Hf ;
- d'autres alliages, par exemple : le Fe-Pt, le Fe-Mn-Si, le Mn-Cu, l'In-Ti, l'Ag-Cd, l'Au-Cd.
